# EUROPEAN PATENT SPECIFICATION

(11) **EP 1 860 947 B1**
(45) Date of publication and mention of the grant of the patent: **15.07.2015**
(21) Application number: 06725062.1
(22) Date of filing: 15.03.2006
(51) Int. Cl.: A01N 59/04, A01N 59/00, A01N 25/00, A01P 7/00

(54) **PARASITICIDAL AQUEOUS SUSPENSION**
WÄSSRIGE PARASITIZIDE SUSPENSION
SUSPENSION AQUEUSE ANTIPARASITAIRE

(30) Priority: 17.03.2005 FR 0502660
(43) Date of publication of application: 05.12.2007
(73) Proprietor: SOLVAY SA, 1120 Bruxelles (BE)
(72) Inventor: PASCAL, Jean-Philippe, 54000 Nancy (FR); PALANGIE, Nicolas, 60880 Le Meux (FR)
(74) Representative: Teipel, Stephan
(86) International application number: PCT/EP2006/060735
(87) International publication number: WO 2006/097480

(56) References cited:
- WO-A-01/35744
- WO-A-02/102158
- WO-A-2004/056184
- WO-A-2005/025317
- US-A- 5 122 518
- DATABASE CAPLUS [Online] CHEMICAL ABSTRACTS SERVICE, COLUMBUS, OHIO, US; 1990, DAVID A. PASQUALE ET AL.: "Ammonium bicarbonate inhibition of mycotoxigenic fungi and spoilage yeasts" XP002284736 retrieved from STN Database accession no. 1990:529225 & J.FOOD PROTECTION, vol. 53, no. 4, 1990, pages 324-328,
- FIELDS, P. ET AL.: "Diatoms Industrial Use: Diatomaceous Earth as insecticide" EUREKA:DIATOMS-NATURE'S GERMS, [Online] 2 August 2002 (2002-08-02), pages 1-6, XP002344782 Retrieved from the Internet: URL:http://hjs.geol.uib.no/diatoms/industr y/de-web.shtml> [retrieved on 2005-09-13]

## Description

The invention relates to a parasiticidal aqueous suspension. It also relates to the use of such a suspension, and to a method of deparasitizing.

The term "parasiticidal aqueous suspension" is intended to mean an aqueous suspension upon contact with which parasites (arthropods such as fleas, ticks and other acarids), which have a tendency to develop in particular on livestock animals and in their neighbourhood, cannot survive, in particular after evaporation of the suspension.

The parasites may be in the egg, larval or adult state. The action of the suspension can be direct. It can also be indirect, for example when the suspension destroys a substance necessary for the survival of the parasite.

The development of parasites on livestock animals is a worrying well known problem. This development can have considerable consequences on the economic productivity of livestock farms. The absence of an effective solution at a reasonable cost sometimes moreover prompts stockbreeders to resort either to unauthorized remedies or to exaggerated quantities.

It is in particular known practice to control parasites by means of substances that are neurotoxic and growth inhibitors, such as synthetic pyrethrinoids, organophosphorous compounds or carbamates, for example. These substances have the drawback of also being toxic for the animal on which the parasites develop. When the breeding of the animal is intended for human food consumption, the use of neurotoxic parasiticides is prohibited because these substances contaminate the food chain, as attested to by the European directives on biocides (98/8 EC) and on plant protection (91/414 EEC). It also presents risks for the stockbreeders.

The title WO 01/35744 discloses a silica-based parasiticidal composition. This composition in the form of a gel is free of neurotoxic agents but is expensive. Furthermore, the low proportion, in the composition, of active substance requires the application of considerable amounts so as to obtain sufficient effectiveness. Its use in large livestock farms is therefore difficult for economic reasons. Finally, this known composition has the drawback of forming, on the treated surface, a gelatinous deposit to which ambient dust has a tendency to adhere, which reduces its effectiveness over time.

The title WO 2004/102158 (Solvay) discloses the use of sodium bicarbonate as an acaricide (claim 1), and in particular of an acaricidal powder comprising more than 40 % by weight of sodium bicarbonate, free of neurotoxic substances, and such that 90 % of the granules constituting it have a diameter of less than 100 µm (claim 2). The title describes also the use of such powder characterized in that during the treatment, the powder remains in the solid state and in that the treatment comprises brushing, and the use for treating the human environment such as : bedding (mattresses, pillows), carpets, rugs, armchairs, items of clothing, cuddly toys and various mops (page 3 lines 6-11).

The title WO 2004/056184 (Solvay) discloses the use of an acaricidal powder, in particular of a powder comprising more than 40% by weight of sodium bicarbonate, for its acaricidal effects in the storage of cereals (claim 1). The cereals can be stored in a silo and the powder is projected onto the walls of the silo (claim 2). In one embodiment at least 90% of the granules that constitute the powder have a diameter of less than 500 µm (claim 2). In another embodiment the powder comprises at least 95% of sodium bicarbonate (claim 5). In another embodiment the powder comprises at least 1% by weight of silica (claim 8).

The title US 5 122 518 (Vrba et al.) discloses a method of combating insects wherein the insects are treated with a pyrogenically produced, hydrophobic silica. In a preferred embodiment of the invention, the insects can be sprayed with an aqueous dispersion of the pyrogenically produced, hydrophobic silica. In another preferred embodiment of the invention, the insects can be dusted with the powdery, pyrogenically produced, hydrophobic silica. The aqueous dispersion can exhibit a content of pyrogenically produced, hydrophobic silica of 0.2 to 20 percent by weight, preferably 3 to 16 percent by weight.

The invention is aimed at providing a parasiticidal composition that is harmless to humans, has long-lasting effectiveness in combating the parasites that develop on livestock animals, and can be used at a low cost.

Consequently, the invention relates to a parasiticidal aqueous suspension comprising from 5 to 60 % by weight of a mixture comprising from 60 to 99 % of an alkali metal bicarbonate and from 1 to 40 % of silica particles, the silica particles having a mean diameter of less than 10µm and, when the alkali metal bicarbonate is sodium bicarbonate, the suspension comprising less than 20 % by weight of alkali metal bicarbonate.

The aqueous suspension according to the invention comprises from 5 to 60 % by weight of a mixture comprising from 60 to 99 % by weight of an alkali metal bicarbonate. The alkali metal bicarbonate may, for example, be bicarbonate in the strict sense, such as potassium bicarbonate or sodium bicarbonate. In this report, it also however covers compound salts such as alkali metal sesquicarbonates (for example, trona) which comprise bicarbonate. Sodium bicarbonate, potassium bicarbonate or trona are especially suitable. Bicarbonates in the strict sense are recommended. Potassium bicarbonate or sodium bicarbonate, more particularly sodium bicarbonate, is preferred. When the alkali metal bicarbonate is sodium bicarbonate, the suspension according to the invention comprises less than 20 % by weight thereof (relative this time to the weight of suspension).

In a preferred variant of the suspension according to the invention, the concentration of alkali metal bicarbonate in the suspension is greater than its solubility limit. This solubility, which depends on the temperature, is considered at ambient temperature of 20°C. At this temperature, this limit, which must be exceeded, is approximately 8 % for bicarbonate. As a result, the aqueous suspension comprises excess undissolved alkali metal bicarbonate, in the form of particles dispersed in a continuous aqueous phase.

In an advantageous embodiment of this variant, the undissolved alkali metal bicarbonate particles present in the suspension have a particle size distribution such that at least 50 %, preferably 75 %, more preferably 90 %, of the particles have a diameter of less than 100 µ. The mean diameter is advantageously less than 50 µ, preferably 40 µ. The diameters are measured according to ASTM standard C - 690 - 1992. The aqueous suspension can be readily obtained by intensively and very homogenously mixing, with water, a bicarbonate powder having an appropriate particle size, given that, at the time of mixing, the fine particles preferentially dissolve. It is recommended to use the suspension rapidly after preparation thereof, for example within less than 2 hours, so as to avoid sedimentation and possible agglutination of the undissolved particles.

When the concentrations are evaluated relative to the weight of suspension, the aqueous suspension comprises at least 0.05 %, preferably 0.5 %, of silica. It is recommended that it should not comprise more than 15 %, preferably 10 %, thereof. It is also recommended that the suspension should contain more bicarbonate than silica. It has been observed that the presence of silica in the aqueous suspension increases, by synergy, the parasiticidal effects of the alkali metal bicarbonate. Furthermore, since the aqueous suspension comprises high concentrations of bicarbonate, the presence of silica improves the flow of the suspension and therefore promotes homogeneous application thereof. It is recommended that the silica should be in amorphous (and noncrystalline) form so as to be tolerated by the human organism. After evaporation, since the deposit comprising bicarbonate and silica is in the solid state, the bicarbonate forms a type of cement for the silica particles. The silica particles do not therefore have a tendency to spontaneously detach from the support treated nor to form dust. When the alkali metal bicarbonate concentration in the suspension exceeds the solubility limit, this effect also exists for the undissolved bicarbonate particles.

It is preferred for the silica to be in the form of very fine particles, having a high specific surface area, for example greater than 200 m²/g, preferably 400 m²/g, measured according to ISO standard 5794-1, annex D. In an advantageous embodiment of the invention, the silica is in the form of particles having a mean diameter of less than 10 µ.

The mean diameter is measured according to ASTM standard C -690 - 1992.

The bicarbonate-silica mixture must be as homogeneous as possible. It has, however, be observed that, under certain circumstances, in particular when the mixing is carried out in ploughshare mixers, which is advantageous, mixing for too long can result in a loss of effectiveness of the subsequent aqueous suspension. Mixing times of greater than 10 minutes are generally to be avoided. In general, it is also recommended to process the alkali metal bicarbonate-silica mixture in such a way as to fluidize it. This fluidization occurs in a ploughshare mixer when the mixture falls back into the mixer following rotation of the ploughshare.

The inventors consider that this simultaneous presence, disclosed above, in the suspension according to the invention, of dissolved alkali metal bicarbonate and of undissolved silica particles is responsible, after evaporation of the suspension on the treated support, for its excellent adhesion and for its effectiveness, the dissolved bicarbonate that then crystallizes after evaporation forming a type of cement between the undissolved particles. After evaporation, the deposit formed on the support is in the solid state. Ambient dust no longer has a tendency to adhere thereto, which maintains the effectiveness of the composition for a long period of time. It has also been observed that, when the parasite is in contact with the deposit formed after evaporation of the suspension, particles attached by the cement formed by the crystallization of the dissolved bicarbonate detach from the deposit when the parasite moves over the latter and adhere to the parasite, which impairs its movements and appears to bring about its death. The hypothesis would explain the importance of the particle size of the undissolved particles, since particles having a diameter similar too, or even greater than, the size of the parasite are less of a hindrance to its movements.

The alkali metal bicarbonates and the silica are substances which are harmless to humans and animals. In the case of sodium bicarbonate, they are even authorized by various organizations (such as the Food and Drug Administration in the United States and the EEC) in human foods. The parasiticidal aqueous suspension according to the invention requires no other substance active against parasites, such as neurotoxic parasiticides.

According to a preferred variant of the invention, the parasiticidal aqueous suspension is free of any other parasiticidal active ingredient.

The aqueous suspension according to the invention is effective against parasites in numerous environments, including the human environment. The term "environment" is intended to mean all the surfaces on which the parasites may be led to land, move or develop. This environment includes, for example, the walls and the door frame/window frames of homes, offices and livestock buildings, the latter comprising cages, nest boxes, bedding and nests. By virtue of its notable adhesion to the floors and walls of buildings, it has proved to be particularly effective in combating parasites that develop on livestock animals.

Consequently, the invention also relates to a method for controlling the development of parasites on animals reared in buildings, according to which the animal's environment in the building is brought into contact with a parasiticidal aqueous suspension according to the invention.

The bringing into contact can be obtained by any appropriate known means such as sprinkling, spraying or brushing. Spraying is preferred. The amount of suspension to be applied depends on the precise composition of the suspension, on the nature of the parasite and on the environment to be treated. It is generally recommended to apply amounts of suspension corresponding to the application of at least 10, preferably 20g/m² of dry mixture. The application must be as homogeneous as possible.

The application can be carried out all at once. It is, however, preferable to perform at least two, if possible three, separate applications, each for at least three, if possible four, days, but for at most one week.

Since the aqueous suspension is harmless to animals, it has the great advantage of being able to be applied to the animal's environment in the livestock building in the presence of the animal.

Moreover, the method according to the invention can be used before or after contamination of the building by the parasites. If the building is already contaminated, the method makes it possible to kill a substantial amount of parasites. The effect is then curative. If the building is not yet contaminated and has been cleaned, it has been observed that the method according to the invention makes it possible to delay, surprisingly, the development of parasites when it is again occupied by the animals. The latter use of the method, on a cleaned building, is recommended. The effect can then be described as preventive.

The parasites that develop on livestock animals or in their neighbourhood are extremely varied: fleas, lice, bugs and ticks are in particular encountered. Some are in particular classified in the insect family (fleas, human lice, mealworms), others in the acarid family (ticks, sarcoptes).

According to an advantageous variant of the method according to the invention, the parasites are acarids. The method is especially effective against *Dermanyssus gallinae*. These parasites have a tendency to develop abundantly in the environment of laying hens. They are intermittent parasites. They do not always remain in contact with the animal. They are killed during their contact with the treated environment of the animal.

The method according to the invention can be used in combating parasites that develop on any type of livestock animal. By way of example, mention may be made of bovine animals, ovine animals, caprin animals, rabbits, poultry, birds and pigs. The deparasitizing of their environment improves the growth and the development of these animals and increases the productivity of livestock farms.

According to a recommended embodiment of the method according to the invention, the livestock animals are poultry, such as laying hens and broilers. It has been observed that the treatment according to the invention of their environment increases the egg production by laying hens and the growth of chickens, by virtue of the elimination of the parasites.

The method is particularly advantageous for rearing broilers, This is because, unlike the methods using a powder, the method according to the invention allows good adherence of the treatment to litter, consisting of ground straw and wood shavings. The treatment also does not adversely affect the performances of the litter.

Buildings for rearing animals also suffer from the presence of many various moulds and fungi, such as, for example, *Aspergillus,* in particular *furrtigatus.* The presence of bicarbonate in the parasiticidal composition according to the invention makes it possible to also combat their development.

Consequently, the invention also relates to the use of an aqueous suspension according to the invention for its combined parasiticidal and antifungal effects. The combination of a notable adhesion to the floors and walls of buildings, synergistic parasiticidal effects between the silica and the bicarbonate and, finally, antifungal effects of the latter makes the use according to the invention extremely advantageous in the treatment of buildings for rearing animals.

The following examples serve to illustrate the invention.

### Example 1 (in accordance with the invention)

10 kg of a powder containing 85 % by weight of sodium bicarbonate having a mean particle size of 40 µm and such that 75 % of particles have a diameter of less than 65 µm, and 15 % of Sipernat^{®}50S amorphous silica, manufactured by Degussa, were used. The powder was mixed for 10 minutes in a Lödige-type "ploughshare" mixer. It was subsequently mixed with 57 litres of water, by means of a shear-effect dispersing stirrer of "Ultra Turrax Ika" type for 5 minutes, so as to form an aqueous suspension. The aqueous suspension was applied by spraying, by means of a piston membrane pump, under a pressure of 3 bar, at a flow rate of approximately 3 litres per minute, onto the environment of laying hens, in rearing premises, capable of containing 50 000 hens in cages. The amount of suspension applied corresponds approximately to 8 g of active material per square metre of treated surface. The building infested with red lice were filled with hens at the time of the treatment, which is described as curative.

Two other treatments were carried out, under the same conditions as above, on the 7th and the 12th day following the 1st treatment.

Three weeks after the 1 st treatment, no infestation of the building with *Dermanyssus gallinae* red lice was detected.

### Example 2 (in accordance with the invention)

20 kg of a powder containing 85 % by weight of potassium bicarbonate having a mean particle size of 40 µ and such that 75 % of particles have a diameter of less than 65 µ, and 15 % of Sipernat^{®} 50S amorphous silica, manufactured by the company Degussa, are used. The powder is mixed for 20 minutes in a Lodige-type paddle mixer. It is subsequently added to and mixed with 25 litres of water, by means of a stirrer, so as to form an aqueous suspension. The suspension is applied by spraying, by means of a piston pump, under a pressure of 150 bar, at a flow rate of approximately one litre per minute, onto the environment of laying hens, in rearing premises capable of containing 10 000 chickens on the floor. The latter suspension applied corresponds approximately to 20 g of potassium bicarbonate per square metre of treated surface. The building had been dismantled, cleaned and disinfected beforehand and was emptied of hens at the time of the treatment, which is described as preventive. In particular, the gratings were treated. Two weeks after the treatment, the hens were reintroduced into the building. 12 weeks after their reintroduction, no infestation of the building with *Dermanyssus gallinae* red lice was detected.

By comparison, in the absence of treatment but after a similar dismantling, cleaning and disinfection, the infestation appeared after 4 weeks.

### Example 3 (in accordance with the invention)

A parasiticidal aqueous suspension was prepared and applied as in the preceding example, but the potassium bicarbonate was replaced with sodium sesquicarbonate. It was applied at a rate of 20 g/m² of sesquicarbonate, onto the environment of laying hens in a building for rearing in cages (10 000 hens also). At the time of the treatment, the building, still occupied by the hens, showed a very high level of infestation. The homogeneous presence of *Dermanyssus gallinae* red lice in the environment of the hens was responsible for red spots on the eggs produced, the result of the crushing of red lice full of blood during the fall of the egg after laying thereof. 12 hours after the treatment, the infestation had disappeared. 12 weeks after the treatment, it had still not reappeared. The laying hens, which were present during the application of the suspension, showed no discomfort.

### Example 4

In this example, the acarids used (*Dermanyssus gallinae*) come from an industrial poultry farm (origin Sogeval). The sensitivity of the strain to the main families of insecticides was verified. Approximately 200 acarids of all stages were arranged on 15 cm-sided galvanized iron plates that had been pretreated with the various solutions. A Petri dish lid covered the plates on a rubber joint in order to prevent leakages. An aqueous suspension comprising 50 % by weight of a mixture comprising 85 % of potassium bicarbonate (Prolabo 26.219) and 15 % of Sipernat 50S silica was sprayed beforehand onto the bits of iron so as to obtain, after spraying and drying, 20 g of dry active material (bicarbonate + silica) per m². The mortality of the acarids was noted after 15 min, 1 h, 2 h, 4 h and 24 h and at any time period necessary for determining the KT100 (time required to obtain 100 % of deaths). The KT50 (time to obtain 50 % of deaths) is determined by interpolation. A control batch was monitored in parallel so as to determine the natural mortality of the acarids subjected to the same conditions. Three repetitions were carried out for the experimental series. Experimental conditions: 22°C ±1°C; 70 % ± 5 % relative humidity; lighting 1500 lux. The KT50 obtained was 2.1 hours.

### Example 5

The procedure was carried out as in Example 4, but the potassium bicarbonate was replaced with sodium sesquicarbonate. The KT50 obtained was 2.4 hours

### Example 6 (not in accordance with the invention)

The procedure was carried out as in Example 4, but the potassium bicarbonate was replaced with sodium chloride. The KT50 obtained was 6.2 hours.

## Claims

1. Parasiticidal aqueous suspension comprising from 5 to 60 % by weight of a mixture comprising from 60 to 99 % of an alkali metal bicarbonate and from 1 to 40 % of silica particles, the silica particles having a mean diameter of less than 10 µm and, when the alkali metal bicarbonate is sodium bicarbonate, the suspension comprising less than 20 % by weight of alkali metal bicarbonate.

2. Aqueous suspension according to the preceding claim, in which the concentration of alkali metal bicarbonate is greater than its solubility limit in water.

3. Aqueous suspension according to the preceding claim, in which the undissolved alkali metal bicarbonate particles have a particle size distribution such that at least 75 % of the particles have a diameter of less than 100 µ.

4. Aqueous suspension according to any one of the preceding claims, in which the mixture comprises from 5 to 20 % of silica.

5. Aqueous suspension according to any one of the preceding claims, free of any other parasiticidal active ingredient.

6. Aqueous suspension according to any one of the preceding claims, in which the mixture consists exclusively of silica and of alkali metal bicarbonate.

7. Aqueous suspension according to any one of Claims 1 to 6, for combined parasiticidal and antifungal use.

8. Method for controlling the development of parasites on animals reared in buildings, according to which the animal's environment in the building is brought into contact with an aqueous suspension in accordance with any one of Claims 1 to 6.

9. Method according to the preceding claim, in which the parasites are acarids.

10. Method according to either one of Claims 8 and 9, in which the animals are laying hens.

11. Use of an aqueous suspension according to any one of Claims 1 to 6 for its combined parasiticidal and antifungal effect, for the treatment of surfaces of human environment or animal environment such as walls and door frame, window frames of homes, offices, livestock buildings, the latter comprising: cages, nest boxes, bedding and nests.

## Patentansprüche

1. Wässrige parasitizide Suspension, die 5 bis 60 Gew.-% einer Mischung, umfassend 60 bis 99% eines Alkalimetallhydrogencarbonats und 1 bis 40% Siliziumdioxidteilchen, umfasst, wobei die Siliziumdioxidteilchen einen mittleren Durchmesser von weniger als 10 µm aufweisen und, wenn es sich bei dem Alkalimetallhydrogencarbonat um Natriumhydrogencarbonat handelt, die Suspension weniger als 20 Gew.-% Alkalimetallhydrogencarbonat umfasst.

2. Wässrige Suspension nach dem vorhergehenden Anspruch, wobei die Konzentration an Alkalimetallhydrogencarbonat höher als seine Löslichkeitsgrenze in Wasser ist.

3. Wässrige Suspension nach dem vorhergehenden Anspruch, wobei die ungelösten Alkalimetallhydrogencarbonatteilchen solch eine Teilchengrößenverteilung aufweisen, dass mindestens 75% der Teilchen einen Durchmesser von weniger als 100 Mikrometern aufweisen.

4. Wässrige Suspension nach einem der vorhergehenden Ansprüche, wobei die Mischung 5 bis 20% Siliziumdioxid umfasst.

5. Wässrige Suspension nach einem der vorhergehenden Ansprüche, die frei von jeglichem sonstigen parasitiziden Wirkstoff ist.

6. Wässrige Suspension nach einem der vorhergehenden Ansprüche, wobei die Mischung ausschließlich aus Siliziumdioxid und Alkalimetallhydrogencarbonat besteht.

7. Wässrige Suspension nach einem der Ansprüche 1 bis 6 für die kombinierte parasitizide und antifungale Verwendung.

8. Verfahren zum Bekämpfen der Entwicklung von Parasiten an in Gebäuden gehaltenen Tieren, bei dem die Umgebung der Tiere in dem Gebäude mit einer wässrigen Suspension nach einem der Ansprüche 1 bis 6 in Kontakt gebracht wird.

9. Verfahren nach dem vorhergehenden Anspruch, wobei es sich bei den Parasiten um Akariden handelt.

10. Verfahren nach einem der Ansprüche 8 und 9, wobei es sich bei den Tieren um Legehennen handelt.

11. Verwendung einer wässrigen Suspension nach einem der Ansprüche 1 bis 6 für ihre kombinierte parasitizide und antifungale Wirksamkeit für die Behandlung von Oberflächen einer menschlichen Umwelt oder tierischen Umwelt, wie Wänden und Türrahmen, Fensterrahmen von Wohnstätten, Büros und Ställen, wobei letztere Käfige, Nistkästen, Einstreu und Nester umfassen.

## Revendications

1. Suspension aqueuse parasiticide, comprenant de 5 à 60% en poids d'un mélange comprenant de 60 à 99% d'un bicarbonate de métal alcalin et de 1 à 40% de particules de silice, les particules de silice ayant un diamètre moyen inférieur à 10 µm et, lorsque le bicarbonate de métal alcalin est le bicarbonate de sodium, la suspension comprend moins de 20% en poids de bicarbonate de métal alcalin.

2. Suspension aqueuse selon la revendication précédente, dans laquelle la concentration en bicarbonate de métal alcalin est supérieure à sa limite de solubilité dans l'eau.

3. Suspension aqueuse selon la revendication précédente, dans laquelle les particules de bicarbonate de métal alcalin non dissout possèdent une distribution granulométrique telle qu'au moins 75% des particules possèdent un diamètre inférieur à 100 µm.

4. Suspension aqueuse selon l'une quelconque des revendications précédentes, dans laquelle le mélange comprend de 5 à 20% de silice.

5. Suspension aqueuse selon l'une quelconque des revendications précédentes, dépourvue de tout autre ingrédient actif parasiticide.

6. Suspension aqueuse selon l'une quelconque des revendications précédentes, dans laquelle le mélange est constitué exclusivement de silice et de bicarbonate de métal alcalin.

7. Suspension aqueuse selon l'une quelconque des revendications 1 à 6, pour une utilisation parasiticide et antifongique combinée.

8. Méthode de contrôle du développement de parasites chez des animaux élevés dans des bâtiments, selon laquelle l'environnement de l'animal dans le bâtiment est mis en contact avec une suspension aqueuse selon l'une quelconque des revendications 1 à 6.

9. Méthode selon la revendication précédente, dans laquelle les parasites sont des acariens.

10. Méthode selon l'une ou l'autre parmi les revendications 8 et 9, dans laquelle les animaux sont des poules pondeuses.

11. Utilisation d'une suspension aqueuse selon l'une quelconque des revendications 1 à 6 pour son effet parasiticide et antifongique combiné, pour le traitement de surfaces d'un environnement humain ou d'un environnement animal, tel que des murs et des cadres de portes, des cadres de fenêtres d'habitations, de bureaux, de bâtiments d'élevage, ces derniers comprenant : les cages, les pondoirs, les litières et les nids.
